# EUROPÄISCHE PATENTANMELDUNG

(11) **EP 4 783 063 A1**
(43) Veröffentlichungstag der Anmeldung: **29.07.2026**
(21) Anmeldenummer: 25153411.1
(22) Anmeldetag: 22.01.2025
(51) Int. Cl.: G06K 7/00, G06K 7/10, H01Q 1/12

(54) **RFID-LESEGERÄT UND SYSTEM VON RFID-LESEGERÄTEN**

(71) Anmelder: TAGnology RFID GmbH, 8570 Voitsberg (AT)
(72) Erfinder: MILOSAVLJEVIC, Ozren, 8570 Voitsberg (AT); SCHRIEBL, Markus, 8580 Köflach (AT)
(74) Vertreter: Weiser Voith Gugler Patentanwälte Partnerschaft

(57) **Zusammenfassung**

Ein RFID-Lesegerät (G₁) umfasst eine Basis (5₁), einen an der Basis (5₁) gelagerten Motor (6₁) und eine vom Motor (6₁) um eine Drehachse (8₁) drehbare Antenne (7₁), einen oder mehrere um die Drehachse (8₁) verteilt am RFID-Lesegerät (G₁) angeordnete RFID-Transponder (11_{1,1} - 11_{1,4}) und eine mit der Antenne (7₁) und dem Motor (6₁) verbundene Steuerung (10₁), welche dazu ausgebildet ist, den Motor (6₁) zum Drehen der Antenne (7₁) um die Drehachse (8₁) anzusteuern, um einen oder mehrere RFID-Transponder (11_{2,1} - 11_{2,4}) eines benachbarten baugleichen RFID-Lesegeräts (G₂) auszulesen, und die Antenne (7₁) in Abhängigkeit von den ausgelesenen ein oder mehreren RFID-Transpondern (11_{i,j}) auszurichten. Ein System (1) umfasst zumindest zwei solcher RFID-Lesegeräte (G₁, G₂).

## Beschreibung

Die vorliegende Erfindung betrifft ein Radio-Frequency-Identification-("RFID"-)Lesegerät, welches eine Basis, einen an der Basis gelagerten Motor und eine vom Motor um eine Drehachse drehbare Antenne umfasst. Die Erfindung betrifft ferner ein System aus zumindest zwei solchen RFID-Lesegeräten.

Derartige RFID-Lesegeräte sind z.B. aus der KR20130001046A bekannt und werden zum Auslesen von RFID-Transpondern verwendet, die an Gegenständen, Tieren, Fahrzeugen, Personen, usw. angebracht sind. Jeder RFID-Transponder hat eine eindeutige Kennung, die vom RFID-Lesegerät ausgelesen werden und anhand welcher er identifiziert und/oder zumindest grob lokalisiert werden kann, etwa in der Produktion, z.B. an Fließbändern oder Werkplätzen, in der Logistik, z.B. in Lagerräumen oder an Umschlagplätzen, zur Diebstahlssicherung und Überwachung, z.B. an Ein- und Ausgängen eines Lagerraums oder eines Geschäftslokals, etc.

Die Antenne kann über den Motor entweder zum Einrichten einmalig in eine ausgerichtete Antennenstellung gedreht werden, um RFID-Transponder in einem gewünschten räumlichen Bereich auslesen zu können und diesen Bereich somit stationär abzudecken, oder von einer ausgerichteten Antennenstellung aus wiederholt um einen gewünschten Drehwinkel hin- und herschwenkend oder kontinuierlich gedreht werden, um RFID-Transponder in einem größeren räumlichen Bereich auslesen zu können und den Bereich auf diese Weise dynamisch abzudecken.

Um den Bereich mehrfach redundant und/oder einen noch größeren Bereich abdecken zu können, werden meist mehrere RFID-Lesegeräte in einer gewünschten Anordnung vorgesehen. In einer Variante decken zwei RFID-Lesegeräte mit einander zugewandten Antennen einen zwischenliegenden Bereich doppelt ab, sodass ein den Bereich passierender RFID-Transponder mit hoher Zuverlässigkeit ausgelesen wird, selbst wenn eine der Antennen durch zwischenliegende Objekte gegenüber dem RFID-Transponder abgeschirmt ist oder ausfällt, od.dgl.

Um einen vorgegebenen Bereich mit mehreren RFID-Lesegeräten effizient stationär oder dynamisch abdecken zu können, werden die Antennen der RFID-Lesegeräte in ihren jeweiligen Ausrichtungen aufeinander abgestimmt, meist durch Augenmaß oder durch selbsttätige Ausrichtung an in der Umgebung vorinstallierten Funkbaken. Eine Ausrichtung nach Augenmaß ist aufwändig und ihre Genauigkeit von den Fähigkeiten der jeweiligen Person abhängig. Ähnliches gilt für die Installation der Funkbaken an vorgegebenen Positionen der Umgebung. Dies erschwert und verlangsamt das Anordnen mehrerer RFID-Lesegeräte, erhöht das Risiko von Ungenauigkeiten und verschlechtert, bei ungenauer Anordnung, das Ausleseergebnis und folglich die Auslesezuverlässigkeit. Insbesondere bei tragbaren bzw. mobilen RFID-Lesegeräten, die häufig neu angeordnet und dabei in ihrer Ausrichtung verändert werden, ist dies nachteilig.

Es ist Aufgabe der vorliegenden Erfindung, RFID-Lesegeräte der eingangs genannten Art zu schaffen, welche eine vereinfachte Einrichtung mit zuverlässigerem Ausleseergebnis ermöglichen.

Diese Aufgabe wird in einem ersten Aspekt durch ein eingangs erwähntes RFID-Lesegerät gelöst, welches sich erfindungsgemäß durch einen oder mehrere um die Drehachse verteilt am RFID-Lesegerät angeordnete RFID-Transponder und eine mit der Antenne und dem Motor verbundene Steuerung auszeichnet, welche dazu ausgebildet ist, den Motor zum Drehen der Antenne um die Drehachse anzusteuern, um mithilfe der Antenne einen oder mehrere RFID-Transponder eines benachbarten baugleichen RFID-Lesegeräts auszulesen, und die Antenne in Abhängigkeit von dem ausgelesenen einen oder den ausgelesenen mehreren RFID-Transpondern auszurichten.

Erfindungsgemäße RFID-Lesegeräte dienen jeweils nicht nur zum Auslesen von RFID-Transpondern, sondern auch als Orientierungspunkt für die Ausrichtung anderer, baugleicher RFID-Lesegeräte, wozu sie selbst jeweils einen oder mehrere RFID-Transponder aufweisen. So kann die Steuerung jedes RFID-Lesegeräts dessen Antenne einfach, schnell und präzise an dem einen oder den mehreren RFID-Transpondern zumindest eines benachbarten baugleichen RFID-Lesegeräts ausrichten. Zu diesem Zweck dreht die Steuerung des erfindungsgemäßen RFID-Lesegeräts zunächst die Antenne so weit, bis der/die RFID-Transponder des benachbarten baugleichen RFID-Lesegeräts ausgelesen werden kann. In der Folge richtet die Steuerung die Antenne an dem/n ausgelesenen RFID-Transponder/n aus, je nach gewünschter Bereichsabdeckung, z.B. in Richtung des/r ausgelesenen RFID-Transponder/s. Zwei solcher RFID-Lesegeräte bilden dabei gleichsam ein Tor und decken den zwischen den RFID-Lesegeräten liegenden Bereich von beiden Seiten her ab, sodass RFID-Transponder an Gegenständen, die das Tor passieren, zuverlässig ausgelesen werden, selbst wenn der Gegenstand (oder sein Träger) seinen RFID-Transponder gegenüber einem der RFID-Lesegeräte abdecken sollte. Alternativ kann die Steuerung die Antenne in einem anderen Winkel zu dem anderen baugleichen RFID-Lesegerät ausrichten, z.B. schräg dazu oder, um parallele Bereiche abzudecken, normal dazu usw.

Dadurch richten sich erfindungsgemäße RFID-Lesegeräte einfach, schnell und präzise in einer gewünschten Anordnung ein und können - im Falle tragbarer bzw. mobiler RFID-Lesegeräte - schnell von einer gewünschten Anordnung in eine andere verbracht und dort eingerichtet werden. Da die jeweiligen RFID-Transponder fix am RFID-Lesegerät angeordnet sind, kann eine komplexe Vorinstallation von Funkbaken am Einsatzort entfallen.

Bevorzugt ist der eine oder sind die mehreren RFID-Transponder jeweils passive Transponder. Dies ist energiesparend; ferner kann dadurch ein RFID-Lesegerät seine Antenne sogar an einem (noch) nicht energieversorgten benachbarten RFID-Lesegerät ausrichten, wodurch eine besonders schnelle und/oder stromsparende Einrichtung der RFID-Lesegeräte erfolgen kann.

Der/die RFID-Transponder können an verschiedenen Positionen am RFID-Lesegerät angeordnet sein.

In einer ersten vorteilhaften Ausführungsform ist der eine oder sind die mehreren RFID-Transponder an der Basis angeordnet. Dadurch sind die RFID-Transponder in Richtung der Drehachse axial von der Antenne beabstandet, wodurch die Einkopplung unerwünschter Transpondersignale in die eigene Antenne reduziert oder überhaupt unterbunden wird. In einer bevorzugten Variante dieser Ausführungsform besteht die Basis aus einem Material, welches von den RFID-Transpondern genutzte Wellenlängen abschirmt, bevorzugt aus Metall, oder ist die Basis mit einem solchen Material beschichtet. Dadurch werden RFID-Transponder, die sich nicht in dem dem benachbarten RFID-Lesegerät zugewandten Halbraum befinden, von der Basis abgeschirmt und bei der Ausrichtung der Antenne des benachbarten RFID-Lesegeräts nicht berücksichtigt.

In einer zweiten vorteilhaften Ausführungsform umfasst das RFID-Lesegerät ein gegenüber der Basis drehfestes Gehäuse, welches die Antenne umgibt. In einer günstigen Variante dazu sind an dem Gehäuse der eine oder die mehreren RFID-Transponder angeordnet. Das Gehäuse dient damit nicht nur als Schutz für die Antenne bzw. für Passanten, sondern zugleich als Träger des/der RFID-Transponder/s. In diesem Fall ist vorteilhaft, wenn der eine oder die mehreren RFID-Transponder in Richtung der Drehachse von der Antenne beabstandet am Gehäuse angeordnet sind und das Gehäuse im Bereich des einen oder der mehreren RFID-Transponder aus einem Material besteht, welches von den RFID-Transpondern genutzte Wellenlängen abschirmt, bevorzugt aus Metall, oder mit einem solchen Material beschichtet ist, um durch Abschirmung wieder eine Einkopplung unerwünschter Transpondersignale der eigenen RFID-Transponder in die Antenne eines RFID-Lesegeräts zu unterbinden.

Zur groben Ausrichtung der Antenne genügt im Grunde ein einziger RFID-Transponder am RFID-Lesegerät, wobei das RFID-Lesegerät beim Aufstellen bevorzugt derart orientiert wird, dass der RFID-Transponder in dem dem benachbarten RFID-Lesegerät zugewandten Halbraum liegt, was auch für ungeübtes Bedienpersonal einfach erzielbar ist, damit der RFID-Transponder des jeweils benachbarten anderen RFID-Lesegeräts zuverlässig ausgelesen werden kann.

In einer vorteilhaften Ausführungsform sind zumindest zwei RFID-Transponder um die Drehachse - bevorzugt gleichmäßig - verteilt am RFID-Lesegerät angeordnet. Bei gleichmäßiger Verteilung um die Drehachse liegt stets zumindest ein RFID-Transponder in dem dem benachbarten RFID-Lesegerät zugewandten Halbraum, sodass beim Aufstellen der RFID-Lesegeräte ihre Orientierung zueinander beliebig ist. Bei ungleichmäßiger Verteilung um die Drehachse kann mehr als ein RFID-Transponder in dem dem benachbarten RFID-Lesegerät zugewandten Halbraum liegen und so die Genauigkeit der Antennenausrichtung gesteigert werden, jedoch ist wieder entsprechendes Anordnen durch das Bedienpersonal erforderlich.

Besonders vorteilhaft ist, wenn zumindest vier, z.B. fünf, sechs, sieben, acht oder mehr RFID-Transponder - bevorzugt wieder gleichmäßig - um die Drehachse verteilt am RFID-Lesegerät angeordnet sind, wodurch bei gleichmäßiger Verteilung um die Drehachse stets zumindest zwei RFID-Transponder in dem dem benachbarten RFID-Lesegerät zugewandten Halbraum liegen und - bei ungleichmäßiger Verteilung um die Drehachse und entsprechender Anordnung der RFID-Lesegeräte - mehr als zwei RFID-Transponder im dem benachbarten RFID-Lesegerät zugewandten Halbraum zu liegen kommen können.

Günstig ist, wenn die Antenne in ihrer Drehung um die Drehachse eine Nullstellung an der Basis hat und jeder RFID-Transponder in einer bekannten Winkelstellung gegenüber der Nullstellung um die Drehachse angeordnet ist, und wenn dabei die Steuerung dazu ausgebildet ist, die eindeutige Kennung jedes ausgelesenen RFID-Transponders eines benachbarten baugleichen RFID-Lesegeräts zu übermitteln und die Ausrichtung der Antenne in Abhängigkeit von den übermittelten Kennungen der von dem benachbarten baugleichen RFID-Lesegerät ausgelesenen eigenen RFID-Transponder auszurichten. Auf diese Weise kann die Antenne des RFID-Lesegeräts von seiner Steuerung nicht nur in die Richtung des einen oder der mehreren RFID-Transponder des benachbarten baugleichen RFID-Lesegeräts, sondern - zusätzlich oder alternativ - in Abhängigkeit von jenem oder jenen ausgelesenen eigenen RFID-Transponder/n, d.h. jener, die am RFID-Lesegerät selbst angeordnet sind, ausgerichtet werden, was zu einem besonders genauen Ausrichten der Antenne führt.

In einer vorteilhaften alternativen oder ergänzenden Ausführungsform, bei welcher wieder die Antenne in ihrer Drehung um die Drehachse die Nullstellung an der Basis hat und jeder RFID-Transponder in einer bekannten Winkelstellung gegenüber der Nullstellung um die Drehachse angeordnet ist, ist die Steuerung dazu ausgebildet, zu jedem ausgelesenen RFID-Transponder eines benachbarten baugleichen RFID-Lesegeräts eine zugehörige Empfangssignalstärke zu ermitteln und zusammen mit der eindeutigen Kennung des ausgelesenen RFID-Transponder zu übermitteln und die Ausrichtung der Antenne in Abhängigkeit von den vom benachbarten baugleichen RFID-Lesegerät übermittelten Empfangssignalstärken und Kennungen der von jenem ausgelesenen eigenen RFID-Transponder auszurichten. Dadurch kann die Antenne besonders genau in einer gewünschten Stellung zum benachbarten RFID-Lesegerät ausgerichtet werden, da die vom benachbarten RFID-Lesegerät übermittelten Kennungen und Empfangssignalstärken der eigenen RFID-Transponder von der Steuerung beim Ausrichten herangezogen werden können, z.B. durch Gewichtung der übermittelten Kennungen nach den jeweiligen Empfangssignalstärken.

In einem zweiten Aspekt schafft die Erfindung ein System, welches zumindest ein erstes und ein zweites erfindungsgemäßes RFID-Lesegerät umfasst. Bezüglich der Vorteile des Systems wird auf die oben beschriebenen Vorteile des erfindungsgemäßen RFID-Lesegeräts verwiesen.

Die jeweiligen Steuerungen der RFID-Lesegeräte des Systems können jeweils für sich selbst eine ausgerichtete Antennenstellung ermitteln und die Antenne in diese Stellung bringen. Alternativ dazu ist günstig, wenn das System ferner einen zentralen Server umfasst, wobei die Steuerungen des ersten und zweiten RFID-Lesegeräts jeweils dazu ausgebildet sind, Informationen über den einen oder die mehreren ausgelesenen RFID-Transponder des jeweils anderen RFID-Lesegeräts an den Server zu übermitteln, eine vom Server daraus ermittelte ausgerichtete Antennenstellung ihrer Antenne vom Server zu empfangen und ihre Antenne in die empfangene ausgerichtete Antennenstellung zu bringen. Die übermittelten Informationen können beispielsweise die jeweils ausgelesenen Kennungen des eines oder der mehreren RFID-Transponder, deren jeweilige grobe Richtungen vom jeweils auslesenden RFID-Lesegerät aus gesehen und/oder die zu jedem ausgelesenen RFID-Transponder jeweils ermittelte Empfangssignalstärke umfassen. Auch im Fall von mehr als zwei einander benachbarten erfindungsgemäßen RFID-Lesegeräten kann der Server aus den übermittelten Informationen besonders genaue ausgerichtete Antennenstellungen ermitteln, um eine gewünschte Bereichsabdeckung zu erzielen.

Um einen Bereich zwischen zwei RFID-Lesegeräten zuverlässig abzudecken, ist der Server bevorzugt dazu ausgebildet, ausgerichtete Antennenstellungen zu ermitteln, in welchen die Antennen der ersten und zweiten RFID-Lesegeräte einander zugewandt sind. Auf diese Weise wird wie weiter oben beschrieben gleichsam ein Tor gebildet, um den zwischen den RFID-Lesegeräten liegenden Bereich von beiden Seiten abzudecken, sodass RFID-Transponder, welche z.B. an Gegenständen angebracht sind, die das Tor passieren, zuverlässig ausgelesen werden.

Der Server kann eine von den RFID-Lesegeräten gesonderte Einheit sein, insbesondere ein über ein weltweites Datennetz mit einer Vielzahl an weltweit verteilten baugleichen RFID-Lesegeräten verbundener zentraler Server. Alternativ dazu ist vorteilhaft, wenn der Server in die Steuerung des ersten oder zweiten RFID-Lesegeräts integriert ist, sodass das gesamte System alleine durch Aufstellen der RFID-Lesegeräte schnell und einfach an einen neuen Einsatzort verbracht werden kann.

Die Erfindung wird nachstehend anhand von in den beigeschlossenen Zeichnungen dargestellten Ausführungsbeispielen näher erläutert. In den Zeichnungen zeigen:
Fig. 1 ein beispielhaftes System zweier benachbarter erfindungsgemäßer RFID-Lesegeräte, welche an einem Torbogen aufgestellt sind, in einer schematischen Seitenansicht;
Fig. 2 das System von Fig. 1 mit einem dieses passierenden Gegenstand mit auszulesendem RFID-Transponder in Draufsicht;
Fig. 3 verschiedene Stellungen einer drehbaren Antenne eines der RFID-Lesegeräte des Systems von Fig. 1 beim Auslesen von RFID-Transponder des anderen RFID-Lesegeräts in Draufsicht;
Fig. 4 einen Verlauf eines während der Drehung der Antenne von Fig. 3 vom einen RFID-Lesegerät des Systems von Fig. 1 empfangenen Signals der RFID-Transponder des anderen RFID-Lesegeräts des Systems in einem Diagramm der Empfangssignalstärke über dem Drehwinkel;
Fig. 5 eine beispielhafte Tabelle von im Signal von Fig. 4 enthaltenen Kennungen der ausgelesenen RFID-Transponder, jeweils korreliert mit einer Winkelstellung am RFID-Lesegerät;
Fig. 6 das System von Fig. 1 mit einer beispielhaften Antennenausrichtung der beiden RFID-Lesegeräte in Draufsicht; und
die Fig. 7 und 8 das System von Fig. 1 mit einem dritten erfindungsgemäßen RFID-Lesegerät in einer ersten (Fig. 7) und einer zweiten (Fig. 8) beispielhaften Antennenausrichtung der drei RFID-Lesegeräte jeweils in Draufsicht.

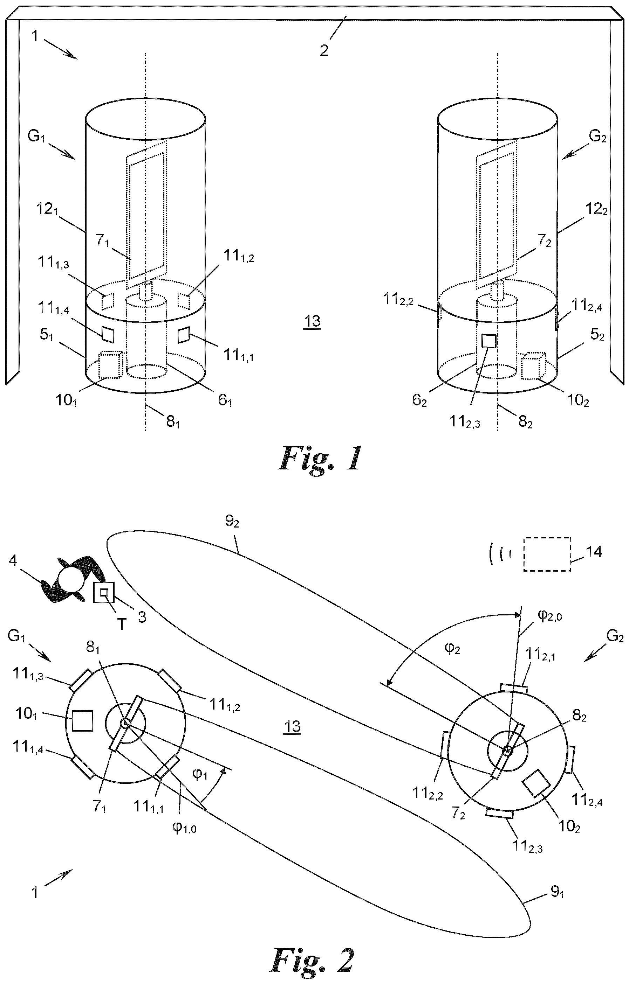

Die Fig. 1 und 2 zeigen ein System 1, welches ein erstes Radio-Frequency-Identification-("RFID")-Lesegerät G₁ und ein benachbartes, d.h. in der Funkreichweite des ersten RFID-Lesegeräts G₁ befindliches, zweites RFID-Lesegerät G₂ aufweist. Die beiden RFID-Lesegeräte G₁, G₂ lesen an einem Einsatzort befindliche RFID-Transponder T (Fig. 2) aus, welche beispielsweise an Gegenständen (z.B. Gütern oder anderen Objekten einschließlich Fahrzeugen) oder an Tieren angebracht und/oder von Fahrzeugen oder Personen mitgeführt werden, um die Gegenstände, Tiere, Fahrzeuge oder Personen in Innenräumen oder im Freien anhand einer Position des jeweiligen RFID-Transponders T zu lokalisieren und/oder anhand einer ausgelesenen Kennung des jeweiligen RFID-Transponders T zu identifizieren, zu zählen od.dgl. Die RFID-Lesegeräte G₁, G₂ können in vielen Anwendungen eingesetzt werden, beispielsweise in der Produktion, Logistik, Überwachung, etc.

Im dargestellten Beispiel sind die RFID-Lesegeräte G₁, G₂ an einem Torbogen 2 aufgestellt, um an (hier: von Personen 4 mitgeführten) Waren 3 angebrachte RFID-Transponder T auszulesen, z.B. zur Diebstahlsicherung oder zur Warenidentifikation für einen Bezahlvorgang oder zur Warenlagerverwaltung.

Die RFID-Lesegeräte G₁, G₂ können fest montiert sein, z.B. am Boden, an einer Wand oder an der Decke, oder tragbar bzw. mobil sein, sodass sie ohne aufwändige Montage und Demontage von einem Einsatzort zum nächsten verbracht und/oder in einer anderen Anordnung - z.B. zu einem anderen Einsatzzweck - aufgestellt werden können.

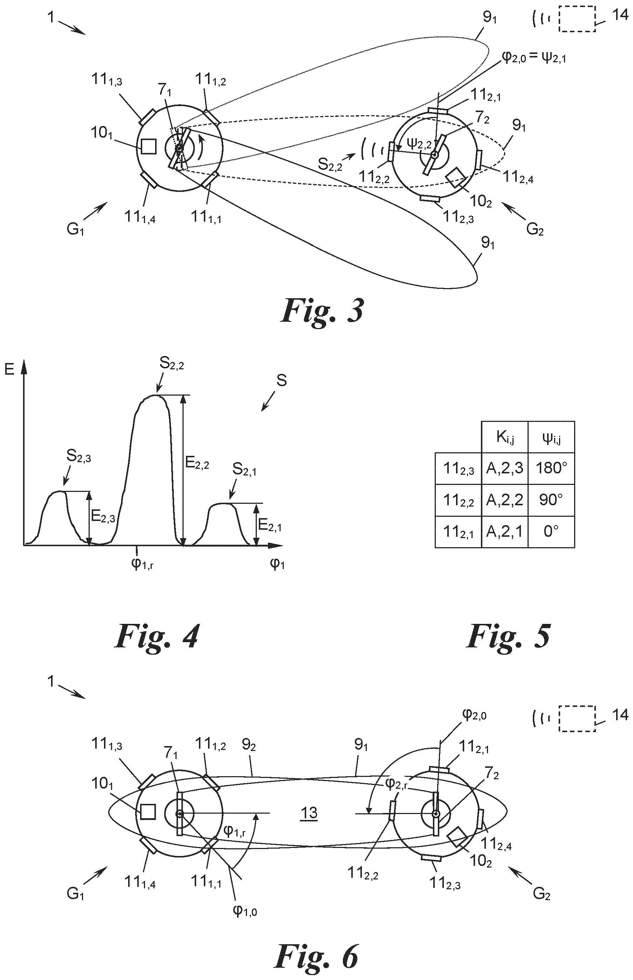

Wie in den Fig. 1 und 2 ersichtlich, hat das erste RFID-Lesegerät G₁ eine Basis 5₁ und einen Motor 6₁, der an der Basis 5₁ gelagert ist (hier: in der Basis 5₁; alternativ: auf der Basis 5₁) und eine Antenne 7₁, welche vom Motor 6₁ um eine (hier: vertikale) Drehachse 8₁ gedreht werden kann, um ihren Funkbereich 9₁ zu verstellen. In der in Fig. 2 dargestellten Stellung ist die Antenne 7₁ gerade um einen Drehwinkel φ₁ aus ihrer Nullstellung φ_{1,0} gegenüber der Basis 5₁ gedreht. Die Antenne 7₁ ist z.B. eine lineare Antenne, zirkulare Antenne, eine Flächenantenne, eine Loopantenne, eine Patchantenne, eine sogenannte LOCFIELD^{®} Antenne od.dgl. und hat eine einseitige (Fig. 2) oder eine mehrseitige (nicht gezeigt) Richtcharakteristik, welche durch einen Funkbereiche 9₁ (Fig. 3) symbolisiert ist.

Ferner hat das RFID-Lesegerät G₁ eine Steuerung 10₁, die mit der Antenne 7₁ und dem Motor 5₁ verbunden ist, um einerseits die Antenne 7₁ zu speisen und von der Antenne 7₁ empfangene Signale S (Fig. 4) zu verarbeiten und andererseits den Motor 6₁ zur Drehung der Antenne 7₁ und ihres Funkbereichs 9₁ anzusteuern. Um den Drehwinkel φ₁ der Antenne 7₁ zu erfassen und einstellen zu können, enthält das RFID-Lesegerät G₁ einen an die Steuerung 10₁ angeschlossenen Drehgeber für den Motor 6₁, z.B. einen Absolutwert-Drehgeber, einen Winkelgeber und/oder einen Nullpunktsensor, welcher beim Drehen der Antenne 7₁ jedes Passieren einer Nullstellung φ_{1,0} detektiert. Die Steuerung 10₁ kann einstückig ausgeführt und z.B. an der Basis 5₁ (Fig. 1) oder der Antenne 7₁ (nicht gezeigt) gelagert sein. Alternativ ist die Steuerung 10₁ geteilt ausgeführt, z.B. mit einem antennennahen Teil an der Antenne 7₁ und einem motornahen Teil an der Basis 5₁ (nicht gezeigt).

Das zweite RFID-Lesegerät G₂ ist baugleich, d.h. im Wesentlichen gleich aufgebaut wie das erste RFID-Lesegerät G₁, wobei gleiche Komponenten mit dem gleichen Bezugszeichen, jedoch dem Index "2" versehen sind.

Die Funkbereiche 9₁, 9₂ der Antennen 7₁, 7₂ der beiden RFID-Lesegeräte G₁, G₂ des Systems 1 können einerseits nach anfänglicher Ausrichtung stationär, d.h. ohne weitere Drehung, betrieben werden; beispielsweise können die Antennen 7₁, 7₂ aus ihren Stellungen gemäß der Fig. 2, in welchen eine den auszulesenden Transponder T tragende Person 4 einen Bereich 13 zwischen den RFID-Lesegeräten G₁, G₂ ohne Auslesen passieren könnte, in die Stellungen der Fig. 6 gedreht werden, in welcher der Bereich 13 für ein sicheres Auslesen des Transponders T von beiden Funkbereichen 9₁, 9₂ abgedeckt ist, selbst wenn die Person 4 den Transponder T z.B. gegenüber einer der beiden Antennen 7₁, 7₂ abdecken würde. Andererseits können die Antennen 7₁, 7₂ im Betrieb der beiden RFID-Lesegeräte G₁, G₂ des Systems 1 alternativ - insbesondere in aufeinander abgestimmter Weise - dynamisch geschwenkt oder kontinuierlich rotiert werden, um einen größeren Bereich abzudecken.

Zur Ausrichtung der Antennen 7₁, 7₂ weisen die RFID-Lesegeräte G₁, G₂ jeweils einen oder mehrere RFID-Transponder 11_{i,j} auf (der Index i entspricht im Folgenden dem Index des zugehörigen RFID-Lesegeräts und der Index j bezeichnet den jeweiligen RFID-Transponder des i-ten RFID-Lesegeräts). Im Falle mehrerer RFID-Transponder 11_{i,j} sind diese jeweils um die Drehachse 8ᵢ verteilt am jeweiligen RFID-Lesegerät Gᵢ angeordnet. Im gezeigten Beispiel sind am ersten und am zweiten RFID-Lesegerät G₁, G₂ jeweils vier RFID-Transponder 11_{1,1} - 11_{1,4}, 11_{2,1} - 11_{2,4} um die jeweilige Drehachse 8₁, 8₂ (optional wie hier: gleichmäßig) verteilt angeordnet. Alternativ dazu, könnten an einem oder beiden RFID-Lesegeräten Gᵢ mehr oder weniger als vier RFID-Transpondern 11_{i,j} angeordnet sein, z.B. einer, zwei, drei, fünf oder mehr.

Die RFID-Transponder 11_{i,j} können aktive Transponder oder passive Transponder sein und für einen oder mehrere Wellenlängenbereiche ausgelegt sein, z.B. für Langwellen ("LF"), Kurzwellen ("HF"), Ultrakurzwellen ("UHF"), usw. Optional kann ein eigener Wellenlängenbereich für die RFID-Transponder 11_{i,j} der RFID-Lesegeräte Gᵢ reserviert sein, z.B. um diese von den anderen auszulesenden RFID-Transpondern T zu unterscheiden.

Dabei können die RFID-Transponder 11_{i,j} an verschiedenen Stellen des jeweiligen RFID-Lesegeräts Gᵢ angeordnet sein. In Fig. 1 sind die RFID-Transponder 11_{i,j} an der jeweiligen Basis 5ᵢ angeordnet, z.B. an der Außenseite. Die jeweilige Basis 5ᵢ besteht optional aus einem Material, das die von den RFID-Transpondern 11_{i,j} verwendeten Wellenlängen abschirmt, z.B. aus Metall, oder ist mit einem solchen Material beschichtet, sodass dem benachbarten RFID-Lesegerät Gᵢ abgewandte RFID-Transponder 11_{i,j} von der Basis 5ᵢ abgeschirmt werden, z.B. die RFID-Transponder 11_{1,3}, 11_{1,4}, 11_{2,4} in den Fig. 2, 3 und 6. Alternativ zur Anordnung an der Basis 5ᵢ können die RFID-Transponder 11_{i,j} an einer anderen Stelle des jeweiligen RFID-Lesegeräts Gᵢ angeordnet sein, z.B. an einem optionalen, die jeweilige Antenne 7ᵢ umgebenden, gegenüber der Basis 5ᵢ drehfesten Gehäuse 12ᵢ. In einer möglichen Variante dessen sind die RFID-Transponder 11_{i,j} in Richtung der jeweiligen Drehachse 8ᵢ von der jeweiligen Antenne 7ᵢ beabstandet, um diese nicht zu stören, und besteht das Gehäuse 12ᵢ im Bereich der RFID-Transponder 11_{i,j} aus einem Material, welches die von den RFID-Transpondern 11_{i,j} verwendeten Wellenlängen abschirmt, z.B. aus Metall, oder ist mit einem solchen Material beschichtet.

In den Beispielen der Fig. 1 - 3 und 6 sind die mehreren RFID-Transponder 11_{i,j} jedes Lesegeräts Gᵢ um die jeweilige Drehachse 8ᵢ herum gleichmäßig verteilt angeordnet, um einen symmetrischen Aufbau zu erzielen. Alternativ dazu können die RFID-Transponder 11_{i,j} jedes Lesegeräts Gᵢ um die jeweilige Drehachse 8ᵢ, 8₂ herum ungleichmäßig verteilt angeordnet sein, z.B. in einem bevorzugten Winkelbereich um die jeweilige Drehachse 8ᵢ.

Im Folgenden werden anhand der Fig. 3 - 6 verschiedene Ausführungsformen der RFID-Lesegeräte Gᵢ und verschiedene Varianten des Ausrichtens der Antenne 7₁ des ersten RFID-Lesegeräts G₁ in Abhängigkeit von den RFID-Transpondern 11_{2,1} - 11_{2,4} des zweiten RFID-Lesegeräts G₂ beschrieben. Das Ausrichten der Antenne 7₂ des zweiten RFID-Lesegeräts G₂ an den RFID-Transpondern 11_{1,1} - 11_{1,4} des ersten RFID-Lesegeräts G₁ erfolgt analog, z.B. zeitgleich, zuvor oder nachher.

Gemäß Fig. 3 steuert die Steuerung 10₁ des ersten RFID-Lesegeräts G₁ zum Ausrichten der Antenne 7₁ in einem ersten Schritt den Motor 6₁ an, um die Antenne 7₁ um die Drehachse 8₁ zu drehen und die Umgebung 2 nach einem benachbarten RFID-Lesegerät G₂ abzusuchen, indem die Steuerung 10₁ mithilfe der Antenne 7₁ zumindest einen der RFID-Transponder 11_{2,1} - 11_{2,4} des zweiten RFID-Lesegeräts G₂ ausliest. Fig. 3 symbolisiert diese Drehung im Gegenuhrzeigersinn durch drei beispielhafte Stellungen der Antenne 7₁ und ihres Funkbereichs 9₁: von einer mit durchgezogenen Linien gezeigten ersten, über eine strichlierte zweite, in eine gepunktete dritten Stellung. Fig. 4 zeigt einen beispielhaften Verlauf eines während dieser Drehung empfangenen Empfangssignals S über dem Drehwinkel φ₁ der Antenne 7₁. Der Signalverlauf enthält ein vom RFID-Transponder 11_{2,3} mit der Empfangssignalstärke E_{2,3} empfangenes Transpondersignal S_{2,3}, ein vom RFID-Transponder 11_{2,2} mit der Empfangssignalstärke E_{2,2} empfangenes Transpondersignal S_{2,2} und ein vom RFID-Transponder 11_{2,1} mit der Empfangssignalstärke E_{2,1} empfangenes Transpondersignal S_{2,1}.

Jeder RFID-Transponder T, 11_{i,j} hat im Allgemeinen eine eindeutige Kennung. So enthält im gezeigten Beispiel jedes Transpondersignal S_{i,j} eines der RFID-Transponder 11_{i,j} optional die auslesbare Kennung K_{i,j} des jeweiligen RFID-Transponders 11_{i,j} des anderen RFID-Lesegeräts Gᵢ, wie in der Tabelle von Fig. 5 beispielhaft gezeigt. Die Kennung K_{i,j} enthält optional einen Hinweis darauf, dass der RFID-Transponder 11_{i,j} an einem der RFID-Lesegeräte Gᵢ des Systems 1 angebracht ist (im vereinfachten Beispiel der Fig. 5: durch ein vorreserviertes Symbol 'A' od.dgl.), oder einen Hinweis auf das RFID-Lesegerät Gᵢ, an welchem der RFID-Transponder 11_{i,j} angebracht ist (z.B. einen dem Lesegerät-Index i ähnlichen Hinweis od.dgl.). Ferner kann, falls gewünscht, eine bekannte Winkelstellung ψ_{i,j}, unter welcher der jeweilige RFID-Transponder 11_{i,j} gegenüber der Nullstellung φ_{i,0} der Antenne 7ᵢ am RFID-Lesegerät Gᵢ angeordnet ist, in der Kennung K_{i,j} enthalten sein.

Im Beispiel der Fig. 3 und 5 sind die RFID-Transponder 11_{2,1}, 11_{2,2}, 11_{2,3} in Winkelstellungen ψ_{i,j} von 0°, 90° und 180° gegenüber der Nullstellung φ_{i,0} der Antenne 7ᵢ am RFID-Lesegerät G₂ angeordnet.

In einem zweiten Schritt richtet die Steuerung 10₁ die Antenne 7₁ in Abhängigkeit von dem (oder hier: den) ausgelesenen RFID-Transponder (n) 11_{2,1} - 11_{2,3} aus, z.B. auf diese hin wie in Fig. 6 gezeigt oder in einem vorgegebenen anderen Winkel zu diesen, indem sie den Motor 6₁ entsprechend ansteuert. Die Ausrichtung der Antenne 11ᵢ, d.h. das Drehen mithilfe der Motors 6ᵢ durch Ansteuerung mit der Steuerung 10ᵢ, in eine Richtung, die einem Drehwinkel φ_{i,r} gegenüber der Nullstellung φ_{i,0} entspricht (Fig. 6), kann auf verschiedene Arten geschehen, z.B. nach einer der folgenden beispielhaften Varianten.

In einer ersten Variante gemäß Fig. 4 richtet die Steuerung 10₁ des ersten RFID-Lesegeräts G₁ mithilfe des Motors 6₁ die Antenne 7₁ in Richtung des Zentrums jenes Bereichs aus, aus welchem die Antenne 7₁ die Transpondersignale S_{2,1} - S_{2,3} der ausgelesenen RFID-Transponder 11_{2,1} - 11_{2,3} des zweiten RFID-Lesegeräts G₂ empfangen hat, oder in einem vorgegebenen anderen Winkel zu dieser Richtung, wenn gewünscht.

In einer zweiten Variante ermittelt die Steuerung 10₁ für jedes Transpondersignal S_{2,1} - S_{2,3} der ausgelesenen RFID-Transponder 11_{2,1} - 11_{2,3} des zweiten RFID-Lesegeräts G₂ eine zugehörige Empfangssignalstärke E_{2,1} - E_{2,3}, z.B. einen RSSI-Wert od.dgl., und richtet die Antenne 7₁ anhand der ermittelten Empfangssignalstärken E_{2,1} - E_{2,3} aus, z.B. in Richtung des Schwerpunkts oder des Maximums der Empfangssignalstärken E_{i,j}, oder in einem vorgegebenen anderen Winkel zu dieser Richtung.

In einer dritten Variante liest die Steuerung 10₂ des zweiten RFID-Lesegeräts G₂ mit ihrer Antenne 7₂ Kennungen K_{1,j} eines oder mehrerer der RFID-Transponder 11_{1,j} des ersten RFID-Lesegeräts G₁ aus (hier: der RFID-Transponder 11_{1,1}, 11_{1,2}, da die anderen RFID-Transponder 11_{1,3}, 11_{1,4} von der hier metallischen Basis 5₁ verdeckt und folglich gegenüber der Antenne 7₂ des zweiten RFID-Lesegeräts G₂ abgeschirmt ist) und übermittelt diese z.B. über eine separate Funkverbindung an das erste RFID-Lesegerät G₁. Die Steuerung 10₁ des ersten RFID-Lesegeräts G₁ empfängt die vom zweiten RFID-Lesegerät G₂ ausgelesenen und übermittelte/n Kennung/en K_{i,j} des/der eigenen RFID-Transponder/s 11_{1,j}. Darauf richtet die Steuerung 10₁ mithilfe des Motors 6₁ ihre Antenne 7₁ (auch) in Abhängigkeit von der/den übermittelten Kennung/en K_{1,j} aus: Die übermittelten Kennungen K_{1,j} geben der Steuerung 10₁ Aufschluss, welche der RFID-Transponder 11_{i,j} in dem dem zweiten RFID-Lesegerät G₂ zugewandten Halbraum liegen und, anhand der zugehörigen, der Steuerung 10₁ bekannten Winkelstellungen ψ_{1,j} dieser RFID-Transponder 11_{1,j}, aus welcher Richtung das zweite RFID-Lesegerät G₂ diese RFID-Transponder 11_{i,j} auslesen konnte. Die Antenne 7₁ kann nun entweder in diese Richtung ausgerichtet werden, oder, falls gewünscht, in einem vorgegebenen anderen Winkel zu dieser Richtung. Der Drehwinkel φ_{1,r} entspricht dabei z.B. dem Zentrum oder einem (optional gewichteten) Mittelwert der Winkelstellungen ψ_{1,j} der vom zweiten RFID-Lesegerät G₂ ausgelesenen RFID-Transponder 11_{1,1}, 11_{1,2}.

Optional kann die Steuerung 10₁ in einer die vorgenannte dritte Variante weiterbildenden vierten Variante neben den Kennungen K_{1,j} auch die zugehörigen Empfangssignalstärken E_{1,j} der vom anderen RFID-Lesegerät G₂ empfangenen Transpondersignale S_{1,j} der eigenen RFID-Transponder 11_{i,j} empfangen und die Antenne 7₁ auch anhand dieser Empfangssignalstärken E_{1,j} ausrichten, z.B. analog zu der für die vorgenannte zweite Variante beschriebenen Weise.

Schließlich können die vorgenannten vier Varianten miteinander kombiniert werden, sodass die Richtung der Antenne 7ᵢ des jeweiligen RFID-Lesegeräts Gᵢ, d.h. der Drehwinkel φ_{1,r}, im ausgerichteten Zustand (im Folgenden auch: die "ausgerichtete Antennenstellung" φ_{i,r}) in Abhängigkeit von zwei oder mehreren der vorgenannten Kriterien, z.B. durch Gewichtung, Mittelwertbildung od.dgl. ermittelt wird. Dabei kann jede Steuerung 10ᵢ für sich selbst die ausgerichtete Antennenstellung" φ_{i,r} ermitteln. Alternativ dazu umfasst das System 1 einen optionalen Server 14 (Fig. 2, 3, 6), welcher die ausgerichteten Antennenstellungen φ_{i,r} für die Steuerungen 10ᵢ ermittelt. Zu diesem Zweck übermittelt jede der Steuerungen 10ᵢ Informationen über den einen oder die mehreren von ihr im ersten Schritt ausgelesenen RFID-Transponder 11_{i,j} des jeweils anderen RFID-Lesegeräts Gᵢ an den Server 14. Die Informationen beinhalten z.B. die Kennung (en) K_{i,j} der jeweils ausgelesenen RFID-Transponder 11_{i,j}, deren jeweilige Richtung aus Sicht des auslesenden RFID-Lesegerät Gᵢ, d.h. den zugehörigen Drehwinkel φᵢ, unter welchem der RFID-Transponder 11_{i,j} ausgelesen wurde, und/oder die jeweils ermittelte Empfangssignalstärke E_{i,j}, z.B. den zugehörigen RSSI-Wert, etc. Das Übermitteln der Informationen kann entweder über die Antennen 7ᵢ erfolgen oder über einen gesonderten Übertragungsweg, z.B. über eine andere Funk- oder Kabelverbindung.

Aus den übermittelten Informationen ermittelt der Server 14 für die Antenne 7ᵢ jedes RFID-Lesegeräts Gᵢ die ausgerichtete Antennenstellung φ_{i,r}, z.B. nach einer oder mehrerer der obigen beispielhaften Varianten, und übermittelt diese an die jeweilige Steuerung 10ᵢ, welche die Antenne 7ᵢ mithilfe des Motors 6ᵢ entsprechend ausrichtet.

Der Server 14 kann eine von den RFID-Lesegeräten Gᵢ gesonderte Einheit oder als Hardware- oder Softwareeinheit in die Steuerung 10ᵢ eines der RFID-Lesegeräte Gᵢ integriert sein.

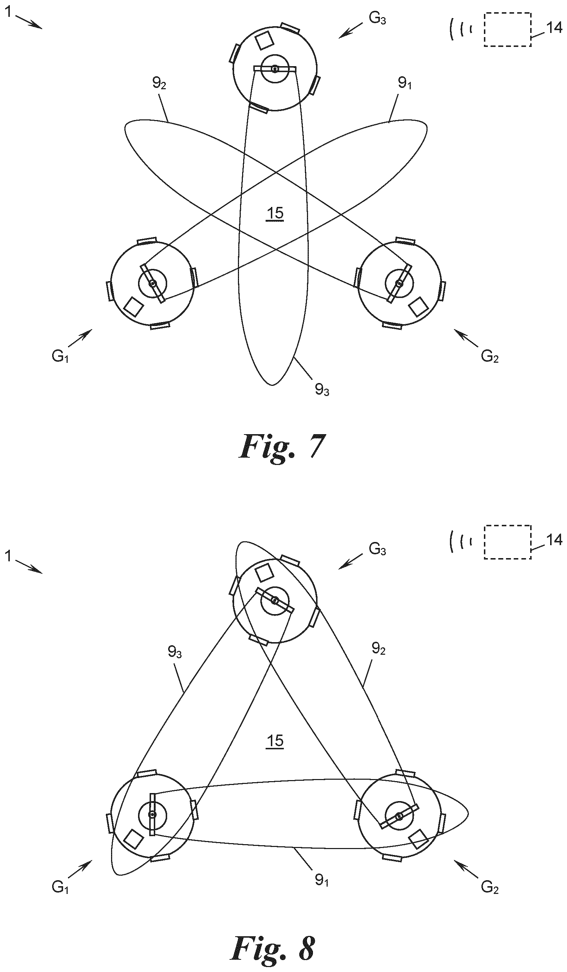

Wie in den Fig. 7 und 8 ersichtlich, kann das System 1 noch ein oder mehrere weitere baugleiche RFID-Lesegeräte Gᵢ aufweisen, hier: ein drittes RFID-Lesegerät G₃, wobei die jeweiligen Antennen 7ᵢ und mit diesen ihre Funkbereiche 9ᵢ nach Wunsch ausgerichtet werden können. Im Beispiel der Fig. 7 sind die Antennen 7ᵢ jedes RFID-Lesegeräts Gᵢ jeweils ins Zentrum zwischen den RFID-Transpondern 11_{i,j} der beiden anderen RFID-Lesegeräte Gᵢ ausgerichtet. Im Beispiel der Fig. 8 sind die Antennen 7ᵢ jedes RFID-Lesegeräts Gᵢ hingegen jeweils auf die RFID-Transponder 11_{i,j} eines der anderen RFID-Lesegeräte Gᵢ ausgerichtet, sodass sie einen zentralen Bereich 15 zwischen den drei RFID-Lesegeräten G₃ umgrenzen.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. RFID-Lesegerät umfassend eine Basis (5₁), einen an der Basis (5₁) gelagerten Motor (6₁) und eine vom Motor (6₁) um eine Drehachse (8₁) drehbare Antenne (7₁), **gekennzeichnet durch** einen oder mehrere um die Drehachse (8₁) verteilt am RFID-Lesegerät (G₁) angeordnete RFID-Transponder (11_{1,1} - 11_{1,4}) und eine mit der Antenne (7₁) und dem Motor (6₁) verbundene Steuerung (10₁), welche dazu ausgebildet ist, den Motor (6₁) zum Drehen der Antenne (7₁) um die Drehachse (8₁) anzusteuern, um mithilfe der Antenne (7₁) einen oder mehrere RFID-Transponder (11_{2,1} - 11_{2,4}) eines benachbarten baugleichen RFID-Lesegeräts (G₂) auszulesen, und die Antenne (7₁) in Abhängigkeit von dem ausgelesenen einen oder den ausgelesenen mehreren RFID-Transpondern (11_{i,j}) auszurichten.

2. RFID-Lesegerät nach Anspruch 1, wobei der eine oder die mehreren RFID-Transponder (11_{1,1} - 11_{1,4}) jeweils passive Transponder sind.

3. RFID-Lesegerät nach Anspruch 1 oder 2, wobei der eine oder die mehreren RFID-Transponder (11_{1,1} - 11_{1,4}) an der Basis (5₁) angeordnet sind.

4. RFID-Lesegerät nach Anspruch 1 oder 2, ferner umfassend ein gegenüber der Basis (5₁) drehfestes Gehäuse (12₁), welches die Antenne (7₁) umgibt.

5. RFID-Lesegerät nach Anspruch 4, wobei an dem Gehäuse (12₁) der eine oder die mehreren RFID-Transponder (11_{1,1} - 11_{1,4}) angeordnet sind.

6. RFID-Lesegerät nach Anspruch 3, wobei die Basis (5₁) aus einem Material besteht, welches von den RFID-Transpondern (11_{1,1} - 11_{1,4}) genutzte Wellenlängen abschirmt, bevorzugt aus Metall, oder mit einem solchen Material beschichtet ist.

7. RFID-Lesegerät nach Anspruch 5, wobei der eine oder die mehreren RFID-Transponder (11_{1,1} - 11_{1,4}) in Richtung der Drehachse (8₁) von der Antenne (7₁) beabstandet am Gehäuse (12₁) angeordnet sind und das Gehäuse (12₁) im Bereich des einen oder der mehreren RFID-Transponder (11_{1,1} - 11_{1,4}) aus einem Material besteht, welches von den RFID-Transpondern (11_{1,1} - 11_{1,4}) genutzte Wellenlängen abschirmt, bevorzugt aus Metall, oder mit einem solchen Material beschichtet ist.

8. RFID-Lesegerät nach Anspruch 6 oder 7, wobei zumindest zwei, bevorzugt zumindest vier RFID-Transponder (11_{1,j}) um die Drehachse (8₁) verteilt am RFID-Lesegerät (G₁) angeordnet sind.

9. RFID-Lesegerät nach Anspruch 8, wobei die RFID-Transponder (11_{1,j}) um die Drehachse (8₁) gleichmäßig verteilt am RFID-Lesegerät (G₁) angeordnet sind.

10. RFID-Lesegerät nach Anspruch 8 oder 9, wobei die Antenne (7₁) in ihrer Drehung um die Drehachse (8₁) eine Nullstellung (φ_{1,0}) an der Basis (5₁) hat und jeder RFID-Transponder (11_{1,j}) in einer bekannten Winkelstellung (ψ_{1,j}) gegenüber der Nullstellung (φ_{1,0}) um die Drehachse (8₁) angeordnet ist, und wobei die Steuerung (10₁) dazu ausgebildet ist, die eindeutige Kennung (K_{2,j}) jedes ausgelesenen RFID-Transponders (11_{2,1} - 11_{2,3}) eines benachbarten baugleichen RFID-Lesegeräts (G₂) zu übermitteln und die Ausrichtung der Antenne (7₁) in Abhängigkeit von den übermittelten Kennungen (K_{1,j}) der von dem benachbarten baugleichen RFID-Lesegerät (G₂) ausgelesenen eigenen RFID-Transponder (11_{1,1} - 11_{1,2}) auszurichten.

11. RFID-Lesegerät nach einem der Ansprüche 8 bis 10, wobei die Antenne (7₁) in ihrer Drehung um die Drehachse (8₁) eine Nullstellung (φ_{1,0}) an der Basis (5₁) hat und jeder RFID-Transponder (11_{1,j}) in einer bekannten Winkelstellung (ψ_{1,j}) gegenüber der Nullstellung (φ_{1,0}) um die Drehachse (8₁) angeordnet ist, und wobei die Steuerung (10₁) dazu ausgebildet ist, zu jedem ausgelesenen RFID-Transponder (11_{2,1} - 11_{2,3}) eines benachbarten baugleichen RFID-Lesegeräts (G₂) eine zugehörige Empfangssignalstärke (E_{2,1} - E_{2,3}) zu ermitteln und zusammen mit der eindeutigen Kennung (K_{2,j}) des ausgelesenen RFID-Transponders (11_{2,1} - 11_{2,3}) zu übermitteln und die Ausrichtung der Antenne (7₁) in Abhängigkeit von den vom benachbarten baugleichen RFID-Lesegerät (G₂) übermittelten Empfangssignalstärken (E_{1,1} - E_{1,2}) und Kennungen (K_{1,j}) der von jenem ausgelesenen eigenen RFID-Transponder (11_{1,1} - 11_{1,2}) auszurichten.

12. System umfassend zumindest ein erstes und ein zweites RFID-Lesegerät (G₂) nach einem der Ansprüche 1 bis 11.

13. System nach Anspruch 12, ferner umfassend einen zentralen Server (14), wobei die Steuerungen (10₁, 10₂) des ersten und zweiten RFID-Lesegeräts (G₁, G₂) jeweils dazu ausgebildet sind, Informationen über den einen oder die mehreren ausgelesenen RFID-Transponder (11_{1,1}, 11_{1,2}; 11_{2,1} - 11_{2,3}) des jeweils anderen RFID-Lesegeräts (G₂, G₁) an den Server (14) zu übermitteln, eine vom Server (14) daraus ermittelte ausgerichtete Antennenstellung (φ_{1,r}, φ_{2,r}) ihrer Antenne (7₁, 7₂) zu empfangen und ihre Antenne (7₁, 7₂) in die empfangene ausgerichtete Antennenstellung (φ_{1,r}, φ_{2,r}) zu bringen.

14. System nach Anspruch 13, wobei der Server (14) dazu ausgebildet ist, ausgerichtete Antennenstellungen (φ_{1,r}, φ_{2,r}) zu ermitteln, in welchen die Antennen (7₁, 7₂) der ersten und zweiten RFID-Lesegeräte (G₁, G₂) einander zugewandt sind.

15. System nach Anspruch 13 oder 14, wobei der Server (14) in die Steuerung (10₁, 10₂) des ersten oder des zweiten RFID-Lesegeräts (G₁, G₂) integriert ist.

## Geänderte Patentansprüche

### Geänderte Patentansprüche gemäss Regel 137(2) EPÜ.

1. RFID-Lesegerät umfassend eine Basis (5₁), einen an der Basis (5₁) gelagerten Motor (6₁) und eine vom Motor (6₁) um eine Drehachse (8₁) drehbare Antenne (7₁), **gekennzeichnet durch** einen oder mehrere um die Drehachse (8₁) verteilt am RFID-Lesegerät (G₁) angeordnete RFID-Transponder (11_{1,1} - 11_{1,4}) und eine mit der Antenne (7₁) und dem Motor (6₁) verbundene Steuerung (10₁), welche dazu ausgebildet ist, den Motor (6₁) zum Drehen der Antenne (7₁) um die Drehachse (8₁) anzusteuern, um mithilfe der Antenne (7₁) einen oder mehrere RFID-Transponder (11_{2,1} - 11_{2,4}) eines benachbarten baugleichen RFID-Lesegeräts (G₂) auszulesen, und die Antenne (7₁) in Abhängigkeit von dem ausgelesenen einen oder den ausgelesenen mehreren RFID-Transpondern (11_{i,j}) auszurichten.

2. RFID-Lesegerät nach Anspruch 1, wobei der eine oder die mehreren RFID-Transponder (11_{1,1} - 11_{1,4}) jeweils passive Transponder sind.

3. RFID-Lesegerät nach Anspruch 1 oder 2, wobei der eine oder die mehreren RFID-Transponder (11_{1,1} - 11_{1,4}) an der Basis (5₁) angeordnet sind.

4. RFID-Lesegerät nach Anspruch 1 oder 2, ferner umfassend ein gegenüber der Basis (5₁) drehfestes Gehäuse (12₁), welches die Antenne (7₁) umgibt.

5. RFID-Lesegerät nach Anspruch 4, wobei an dem Gehäuse (12₁) der eine oder die mehreren RFID-Transponder (11_{1,1} - 11_{1,4}) angeordnet sind.

6. RFID-Lesegerät nach Anspruch 3, wobei die Basis (5₁) aus einem Material besteht, welches von den RFID-Transpondern (11_{1,1} - 11_{1,4}) genutzte Wellenlängen abschirmt, bevorzugt aus Metall, oder mit einem solchen Material beschichtet ist.

7. RFID-Lesegerät nach Anspruch 5, wobei der eine oder die mehreren RFID-Transponder (11_{1,1} - 11_{1,4}) in Richtung der Drehachse (8₁) von der Antenne (7₁) beabstandet am Gehäuse (12₁) angeordnet sind und das Gehäuse (12₁) im Bereich des einen oder der mehreren RFID-Transponder (11_{1,1} - 11_{1,4}) aus einem Material besteht, welches von den RFID-Transpondern (11_{1,1} - 11_{1,4}) genutzte Wellenlängen abschirmt, bevorzugt aus Metall, oder mit einem solchen Material beschichtet ist.

8. RFID-Lesegerät nach Anspruch 6 oder 7, wobei zumindest zwei, bevorzugt zumindest vier RFID-Transponder (11_{1,j}) um die Drehachse (8₁) verteilt am RFID-Lesegerät (G₁) angeordnet sind.

9. RFID-Lesegerät nach Anspruch 8, wobei die RFID-Transponder (11_{1,j}) um die Drehachse (8₁) gleichmäßig verteilt am RFID-Lesegerät (G₁) angeordnet sind.

10. RFID-Lesegerät nach Anspruch 8 oder 9, wobei die Antenne (7₁) in ihrer Drehung um die Drehachse (8₁) eine Nullstellung (φ_{1,0}) an der Basis (5₁) hat und jeder RFID-Transponder (11_{1,j}) in einer bekannten Winkelstellung (ψ_{1,j}) gegenüber der Nullstellung (φ_{1,0}) um die Drehachse (8₁) angeordnet ist, und wobei die Steuerung (10₁) dazu ausgebildet ist, die eindeutige Kennung (K_{2,j}) jedes ausgelesenen RFID-Transponders (11_{2,1} - 11_{2,3}) eines benachbarten baugleichen RFID-Lesegeräts (G₂) zu übermitteln und die Ausrichtung der Antenne (7₁) in Abhängigkeit von den übermittelten Kennungen (K_{1,j}) der von dem benachbarten baugleichen RFID-Lesegerät (G₂) ausgelesenen eigenen RFID-Transponder (11_{1,1} - 11_{1,2}) auszurichten.

11. RFID-Lesegerät nach Anspruch 8 oder 9, wobei die Antenne (7₁) in ihrer Drehung um die Drehachse (8₁) eine Nullstellung (φ_{1,0}) an der Basis (5₁) hat und jeder RFID-Transponder (11_{1,j}) in einer bekannten Winkelstellung (ψ_{1,j}) gegenüber der Nullstellung (φ_{1,0}) um die Drehachse (8₁) angeordnet ist, und wobei die Steuerung (10₁) dazu ausgebildet ist, zu jedem ausgelesenen RFID-Transponder (11_{2,1} - 11_{2,3}) eines benachbarten baugleichen RFID-Lesegeräts (G₂) eine zugehörige Empfangssignalstärke (E_{2,1} - E_{2,3}) zu ermitteln und zusammen mit der eindeutigen Kennung (K_{2,j}) des ausgelesenen RFID-Transponders (11_{2,1} - 11_{2,3}) zu übermitteln und die Ausrichtung der Antenne (7₁) in Abhängigkeit von den vom benachbarten baugleichen RFID-Lesegerät (G₂) übermittelten Empfangssignalstärken (E_{1,1} - E_{1,2}) und Kennungen (K_{1,j}) der von jenem ausgelesenen eigenen RFID-Transponder (11_{1,1} - 11_{1,2}) auszurichten.

12. System umfassend zumindest ein erstes und ein zweites RFID-Lesegerät (G₂) nach einem der Ansprüche 1 bis 11.

13. System nach Anspruch 12, ferner umfassend einen zentralen Server (14), wobei die Steuerungen (10₁, 10₂) des ersten und zweiten RFID-Lesegeräts (G₁, G₂) jeweils dazu ausgebildet sind, Informationen über den einen oder die mehreren ausgelesenen RFID-Transponder (11_{1,1}, 11_{1,2}; 11_{2,1} - 11_{2,3}) des jeweils anderen RFID-Lesegeräts (G₂, G₁) an den Server (14) zu übermitteln, eine vom Server (14) daraus ermittelte ausgerichtete Antennenstellung (φ_{1,r}, φ_{2,r}) ihrer Antenne (7₁, 7₂) zu empfangen und ihre Antenne (7₁, 7₂) in die empfangene ausgerichtete Antennenstellung (φ_{1,r}, φ_{2,r}) zu bringen.

14. System nach Anspruch 13, wobei der Server (14) dazu ausgebildet ist, ausgerichtete Antennenstellungen (φ_{1,r}, φ_{2,r}) zu ermitteln, in welchen die Antennen (7₁, 7₂) der ersten und zweiten RFID-Lesegeräte (G₁, G₂) einander zugewandt sind.

15. System nach Anspruch 13 oder 14, wobei der Server (14) in die Steuerung (10₁, 10₂) des ersten oder des zweiten RFID-Lesegeräts (G₁, G₂) integriert ist.
